# EUROPÄISCHE PATENTSCHRIFT

(11) **EP 2 242 299 B1**
(45) Veröffentlichungstag und Bekanntmachung des Hinweises auf die Patenterteilung: **10.09.2014**
(21) Anmeldenummer: 10001988.4
(22) Anmeldetag: 26.02.2010
(51) Int. Cl.: H04W 24/08, H04L 29/12

(54) **Überprüfung der Funktionsfähigkeit von Kommunikationsdiensten für in Mobilfunknetzen betreibbare mobile Endgeräte bei einem Roaming-Betrieb in wenigstens zwei Mobilfunknetzen**
Checking the functionality of communication services for mobile terminals which can be operated in mobile networks using a roaming system in at least two mobile networks networks
Contrôle de la capacité de fonctionnement de services de communication pour terminaux mobiles fonctionnant dans des réseaux radio mobiles en fonctionnement d'itinérance dans au moins deux réseaux radio mobiles

(30) Priorität: 27.02.2009 DE 102009010685
(43) Veröffentlichungstag der Anmeldung: 20.10.2010
(73) Patentinhaber: Vodafone Holding GmbH, 40213 Düsseldorf (DE)
(72) Erfinder: Schulz, Sebastian, 42579 Heiligenhaus (DE); Stanke, Jürgen, 59425 Unna (DE)
(74) Vertreter: Ring & Weisbrodt

(56) Entgegenhaltungen:
- EP-A1- 1 868 398
- WO-A1-99/09726
- US-A- 5 664 185
- Brien M. Posey: "Using NSLOOKUP for DNS Server diagnosis"[Online] 27. September 2005 (2005-09-27), Seiten 1-5, XP002595924 WindowsNetworking.com Gefunden im Internet: URL:http://www.windowsnetworking.com/artic les_tutorials/Using-NSLOOKUP-DNS-Server-di agnosis.html?printversion> [gefunden am 2010-08-09]
- Sun: "UNIX man pages : nslookup (1)"[Online] 11. Januar 2002 (2002-01-11), XP002595925 UNIX manual Gefunden im Internet: URL:http://www.s-gms.ms.edus.si/cgi-bin/ma n-cgi?nslookup+1M> [gefunden am 2010-08-10]

## Beschreibung

Die vorliegende Erfindung betrifft ein Verfahren zur Überprüfung der Funktionsfähigkeit von Kommunikationsdiensten für in Mobilfunknetzen betreibbare mobile Endgeräte bei einem Roaming-Betrieb in wenigstens zwei Mobilfunknetzen.

Gegenstand der vorliegenden Erfindung ist ferner ein Netzknoten in einem Mobilfunknetz, insbesondere einem Mobilfunknetz gemäß einem GSM-, GPRS-, UMTS- und/oder LTE-Funknetzstandard, welcher ausgebildet und/oder eingerichtet ist ein erfindungsgemäßes Verfahrens zumindest teilweise auszuführen.

Im Stand der Technik sind insbesondere im Zusammenhang mit einem sogenannten Roaming bzw. Roaming-Betrieb zahlreiche Verfahren und Vorrichtungen bekannt, die dem Nutzer eines mobilen Endgerätes eine Kommunikation mit selbigem auch in fremden Mobilfunknetzen, also Mobilfunknetzen, die nicht von dem Mobilfunknetzbetreiber des Nutzers des mobilen Endgerätes unterhalten werden, ermöglichen. Ferner sind im Stand der Technik verschiedene Verfahren und Vorrichtungen bekannt, die eine Überprüfung der Funktionsfähigkeit von Kommunikationsdiensten für in Mobilfunknetzen betreibbare mobile Endgeräte bei einem Roaming-Betrieb in wenigstens zwei Mobilfunknetzen ermöglichen, beispielsweise aus der EP 1 868 398 A1.

Bei dem seitens der EP 1 868 398 A1 offenbarten Verfahren ist dabei insbesondere eine Lokalisierung von Störungen in Kommunikationsverbindungen bei einem Roaming-Betrieb in wenigstens zwei Mobilfunknetzen derart realisiert, dass die Verfügbarkeit und/oder die Leistungsfähigkeit von für die Kommunikationsverbindung im Mobilfunknetz des sogenannten Roaming-Partners (zweites Mobilfunknetz) eingerichteten Einrichtungen, insbesondere DNS-Server (DNS: Domain Name System) des Mobilfunknetzes des Roaming-Partners und/oder Zugangspunkte (APNs; APN: Access Point Name) des Backbones des Mobilfunknetzes des Roaming-Partners, von dem Mobilfunknetz des anderen Roaming-Partners (erstes Mobilfunknetz) aus bestimmbar ist.

Nachteilig bei den bisher bekannten Lösungen ist insbesondere, dass eine Überprüfung der Funktionsfähigkeit von Kommunikationsdiensten des eigenen Mobilfunknetzes eines Mobilfunknetzbetreibers (erstes Mobilfunknetz) bei einem Roaming-Betrieb aus Sicht des andern Mobilfunknetzes eines anderen Mobilfunknetzbetreibers (zweites Mobilfunknetz) nicht möglich ist.

Der vorliegenden Erfindung liegt in Anbetracht dieses Standes der Technik die Aufgabe zugrunde, die Überprüfung der Funktionsfähigkeit von Kommunikationsdiensten für in Mobilfunknetzen betreibbare mobile Endgeräte bei einem Roaming-Betrieb in wenigstens zwei Mobilfunknetzen zu verbessern, insbesondere hinsichtlich einer Überprüfung der Funktionsfähigkeit von Kommunikationsdiensten des eigenen Mobilfunknetzes (ersten Mobilfunknetzes) bei einem Roaming-Betrieb aus Sicht des andern Mobilfunknetzes (zweiten Mobilfunknetzes). Erfindungsgemäß soll der Roaming-Betrieb verbessert werden, insbesondere hinsichtlich der Zufriedenheit der Nutzer von mobilen Endgeräten als auch der jeweiligen Roaming-Partner.

Zur technischen Lösung wird mit der vorliegenden Erfindung ein Verfahren zur Überprüfung der Funktionsfähigkeit von Kommunikationsdiensten für in Mobilfunknetzen betreibbare mobile Endgeräte bei einem Roaming-Betrieb in wenigstens zwei Mobilfunknetzen, wobei eine Recheneinrichtung eines ersten Mobilfunknetzes wenigstens eine an die Recheneinrichtung des ersten Mobilfunknetzes zu richtende Anfrage nach der Funktionsfähigkeit wenigstens eines Kommunikationsdienstes des ersten Mobilfunknetzes an wenigstens eine Recheneinrichtung wenigstens eines zweiten Mobilfunknetzes sendet, die wenigstens eine Recheneinrichtung des wenigstens einen zweiten Mobilfunknetzes aus der wenigstens einen empfangenen, an die Recheneinrichtung des ersten Mobilfunknetzes zu richtenden Anfrage nach der Funktionsfähigkeit wenigstens eines Kommunikationsdienstes des ersten Mobilfunknetzes wenigstens eine Anfrage nach der Funktionsfähigkeit wenigstens eines Kommunikationsdienstes der Recheneinrichtung des ersten Mobilfunknetzes erzeugt und die wenigstens eine erzeugte Anfrage nach der Funktionsfähigkeit wenigstens eines Kommunikationsdienstes der Recheneinrichtung des ersten Mobilfunknetzes an die Recheneinrichtung des ersten Mobilfunknetzes sendet, die Recheneinrichtung des ersten Mobilfunknetzes auf die wenigstens eine empfangene Anfrage nach der Funktionsfähigkeit wenigstens eines Kommunikationsdienstes des ersten Mobilfunknetzes wenigstens eine Antwort erzeugt und die wenigstens eine erzeugte Antwort an die wenigstens eine Recheneinrichtung des wenigstens einen zweiten Mobilfunknetzes sendet, und die wenigstens eine Recheneinrichtung des wenigstens einen zweiten Mobilfunknetzes die wenigstens eine empfangene Antwort an die Recheneinrichtung des ersten Mobilfunknetzes sendet.

Der Erfindung liegt die Erkenntnis zugrunde, dass ein verbesserter Roaming-Betrieb erzielbar ist, wenn ausgehend von dem ersten Mobilfunknetz eine Überprüfung der Funktionsfähigkeit des Kommunikationsdienstes des eigenen Mobilfunknetzes (ersten Mobilfunknetzes) von dem zweiten Mobilfunknetz aus initiierbar und das Ergebnis einer entsprechenden Überprüfung seitens des ersten Mobilfunknetzes nutzbar ist.

Gemäß einer vorteilhaften Ausgestaltung der Erfindung umfasst die wenigstens eine an die Recheneinrichtung des ersten Mobilfunknetzes zu richtende Anfrage nach der Funktionsfähigkeit wenigstens eines Kommunikationsdienstes des ersten Mobilfunknetzes wenigstens eine Adressierungsinformation für einen Zugang zu dem wenigstens einen Kommunikationsdienst des ersten Mobilfunknetzes aus dem wenigstens einen zweiten Mobilfunknetz.

In einer weiteren vorteilhaften Ausgestaltung der Erfindung umfasst die wenigstens eine an die Recheneinrichtung des ersten Mobilfunknetzes zu richtende Anfrage nach der Funktionsfähigkeit wenigstens eines Kommunikationsdienstes des ersten Mobilfunknetzes eine Anfrage nach der Verfügbarkeit und/oder der Leistungsfähigkeit des wenigstens eines Kommunikationsdienstes des ersten Mobilfunknetzes im Roaming-Betrieb.

In einer bevorzugten Ausgestaltung der Erfindung ist der wenigstens eine Kommunikationsdienst des ersten Mobilfunknetzes ein Datendienst, vorzugsweise ein auf IP-Adressen bzw. IP-Adressierungsinformationen basierender Datendienst.

Eine weitere vorteilhafte Ausgestaltung der Erfindung ist **dadurch gekennzeichnet, dass** die wenigstens eine an die Recheneinrichtung des ersten Mobilfunknetzes zu richtende Anfrage nach der Funktionsfähigkeit wenigstens eines Kommunikationsdienstes des ersten Mobilfunknetzes seitens wenigstens einer Einrichtung des ersten Mobilfunknetzes erzeugt und/oder vorgehalten wird. Erfindungsgemäß sind so vorteilhafterweise einzelne Überprüfungen und/oder Überprüfungsroutinen hinterlegbar und/oder nutzbar, vorteilhafterweise zumindest teilautomatisiert.

Eine weitere vorteilhafte Ausgestaltung der Erfindung ist **dadurch gekennzeichnet, dass** die wenigstens eine von der Recheneinrichtung des ersten Mobilfunknetzes empfangene Antwort seitens wenigstens einer Einrichtung des ersten Mobilfunknetzes erfasst und/oder vorgehalten wird. Erfindungsgemäß lassen sich so Überprüfungen vorteilhafterweise dokumentiert erfassen. Eine besonders bevorzugte Ausgestaltung der Erfindung sieht vor, dass zumindest aus einem Teil der empfangen Antworten zumindest teilautomatisiert Überprüfungen und/oder Überprüfungsroutinen erzeugen lassen, welche dann für weitergehende Überprüfungen nutzbar sind.

Vorteilhafterweise ist die wenigstens eine Einrichtung des ersten Mobilfunknetzes administrierbar, besonders bevorzugt seitens des ersten Mobilfunknetzes. Eine weitere vorteilhafte Ausgestaltung der Erfindung ist gekennzeichnet durch eine Administration hinsichtlich der wenigstens einen an die Recheneinrichtung des ersten Mobilfunknetzes zu richtenden Anfrage nach der Funktionsfähigkeit wenigstens eines Kommunikationsdienstes des ersten Mobilfunknetzes und/oder hinsichtlich der wenigstens einen von der Recheneinrichtung des ersten Mobilfunknetzes empfangenen Antwort.

Eine bevorzugte Ausgestaltung der Erfindung sieht vor, dass die Recheneinrichtung des ersten Mobilfunknetzes ein DNS-Server des ersten Mobilfunknetzes ist. Eine weitere bevorzugte Ausgestaltung der Erfindung sieht vor, dass die wenigstens eine Recheneinrichtung des wenigstens einen zweiten Mobilfunknetzes ein DNS-Server des wenigstens einen zweiten Mobilfunknetzes ist.

In einer weiteren bevorzugten Ausgestaltung der Erfindung ist die wenigstens einer Einrichtung des ersten Mobilfunknetzes ein WCP-IRM DNS Modul.

Gemäß einer besonders bevorzugten Ausgestaltung der Erfindung ist die Anfrage nach der Funktionsfähigkeit wenigstens eines Kommunikationsdienstes des ersten Mobilfunknetzes ein sogenannter "nslookup".

Vorteilhafterweise ist das erste Mobilfunknetz und/oder das wenigstens eine zweite Mobilfunknetz ein Mobilfunknetz gemäß einem GSM-, GPS-, UMTS- und/oder LTE-Funknetzstandard.

Zur technischen Lösung der eingangs genannten Aufgabe wird mit der vorliegenden Erfindung ferner ein Netzknoten in einem Mobilfunknetz, insbesondere einem Mobilfunknetz gemäß einem GSM-, GPRS-, UMTS- und/oder LTE-Funknetzstandard, vorgeschlagen, welcher ausgebildet und/oder eingerichtet ist ein erfindungsgemäßes Verfahrens zumindest teilweise auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig.1: in einer schematischen Prinzipdarstellung ein Ausführungsbeispiel für an einer erfindungsgemäßen Funktionsfähigkeitsüberprüfung beteiligter Einrichtungen eines ersten Mobilfunknetzes und eines zweiten Mobilfunknetzes in einem Roaming-Betrieb;
- Fig. 2: in einer schematischen Prinzipdarstellung das Ausführungsbeispiel nach Fig. 1 mit einem Ausführungsbeispiel eines erfindungsgemäßen Verfahrensschrittes;
- Fig.3: in einer schematischen Prinzipdarstellung das Ausführungsbeispiel nach Fig. 1 mit einem Ausführungsbeispiel eines weiteren erfindungsgemäßen Verfahrensschrittes;
- Fig.4: in einer schematischen Prinzipdarstellung das Ausführungsbeispiel nach Fig. 1 mit einem Ausführungsbeispiel weiterer erfindungsgemäßer Verfahrensschritte;
- Fig. 5: in einer schematischen Prinzipdarstellung das Ausführungsbeispiel nach Fig. 1 mit einem Ausführungsbeispiel weiterer erfindungsgemäßer Verfahrensschritte und
- Fig. 6: in einer schematischen Prinzipdarstellung das Ausführungsbeispiel nach Fig. 1 mit einem Ausführungsbeispiel weiterer erfindungsgemäßer Verfahrensschritte.

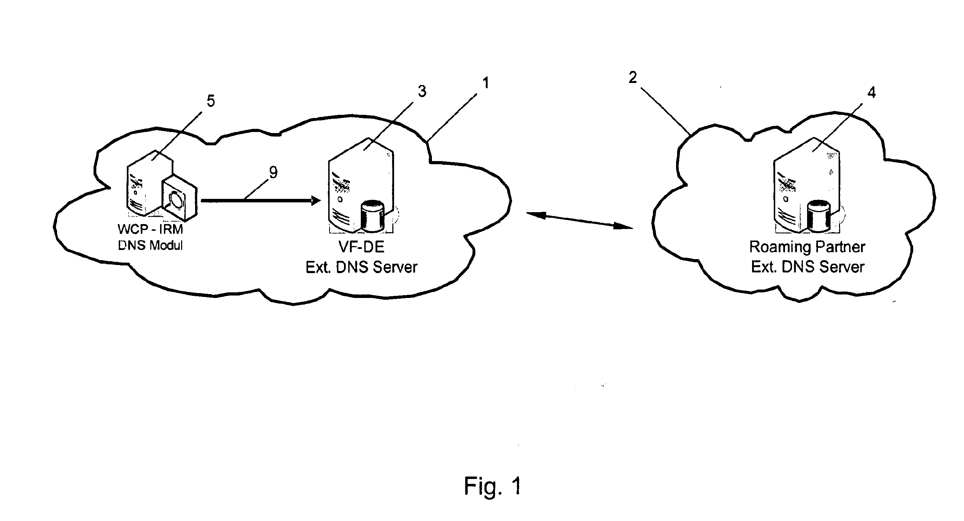

In Fig. 1 bis Fig. 6 sind ein erstes Mobilfunknetz 1 und ein zweites Mobilfunknetz 2 symbolisch als Wolken dargestellt. Das erste Mobilfunknetz 1 und das zweite Mobilfunknetz 2 befinden sich dabei in einem sogenannten Roaming-Betrieb (symbolisch durch den Doppelpfeil zwischen dem ersten Mobilfunknetz 1 und dem zweiten Mobilfunknetz 2 dargestellt). Dabei ist dem Nutzer eines mobilen Endgerätes, dessen Heimatmobilfunknetz das erste Mobilfunknetz 1 ist eine Kommunikation mit selbigem auch in dem insofern fremden zweiten Mobilfunknetz 2 ermöglicht. Zwischen den einzelnen Einrichtungen des ersten Mobilfunknetzes 1 und des zweiten Mobilfunknetzes 2, von denen vorliegend aus Gründen der Übersichtlichkeit lediglich die an einem erfindungsgemäßen Verfahren beteiligten und nachfolgend noch näher Einrichtungen 3, 4 und 5 dargestellt sind, erfolgen dabei untereinander als auch miteinander verschiedene Signalisierungen zum Aufbau, der Aufrechterhaltung, der Verwaltung und insbesondere zur Abrechnung einer entsprechenden Kommunikation, welche in Fig. 1 bis Fig. 6 symbolisch durch den Doppelpfeil zwischen dem ersten Mobilfunknetz 1 und dem zweiten Mobilfunknetz 2 dargestellt sind.

Vorliegend wird die erfindungsgemäße Überprüfung von einem zentralen System bzw. einer zentralen Einrichtung 5 des ersten Mobilfunknetzes 1, vorliegend realisiert mit einem WCP-IRM DNS Modul 5 des ersten Mobilfunknetzes 1 gesteuert. Hierzu besteht eine Verbindung 9 (vgl. Fig. 1 bis Fig. 5) von der zentralen Einrichtung 5 zu einer für den zu überprüfenden Kommunikationsdienst zuständigen Recheneinrichtung 3 des ersten Mobilfunknetzes 1, vorliegend einem DNS-Server 3 des ersten Mobilfunknetzes 1. Erfindungsgemäß wird der DNS Server 3 des ersten Mobilfunknetzes 1 derart gesteuert, dass dieser eine erfindungsgemäße Funktionsfähigkeitsüberprüfung unter Nutzung eines sogenannten "nslookup" - welcher beim DNS-Protokoll genutzt wird, um einen Namen in eine IP-Adresse umzuwandeln -als Anfrage ausführt.

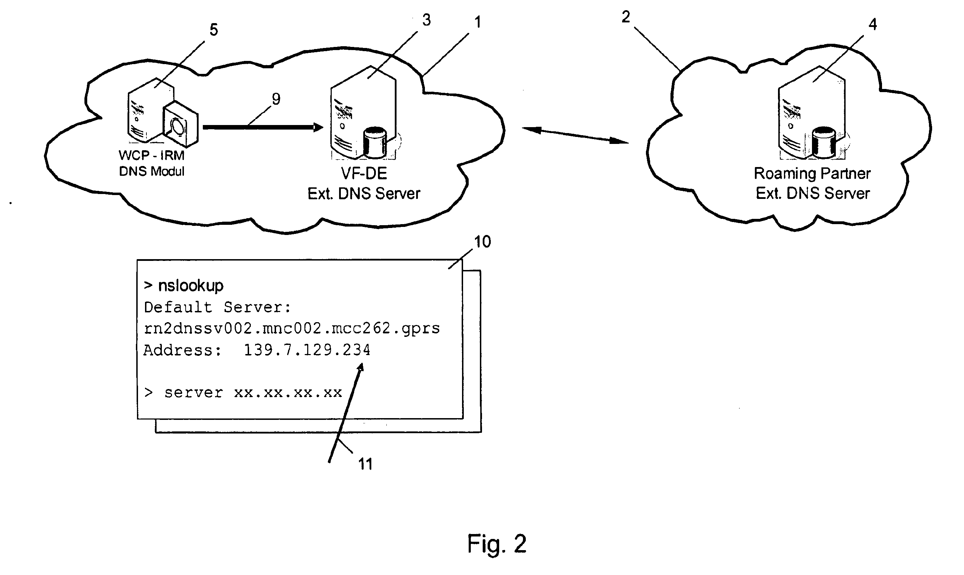

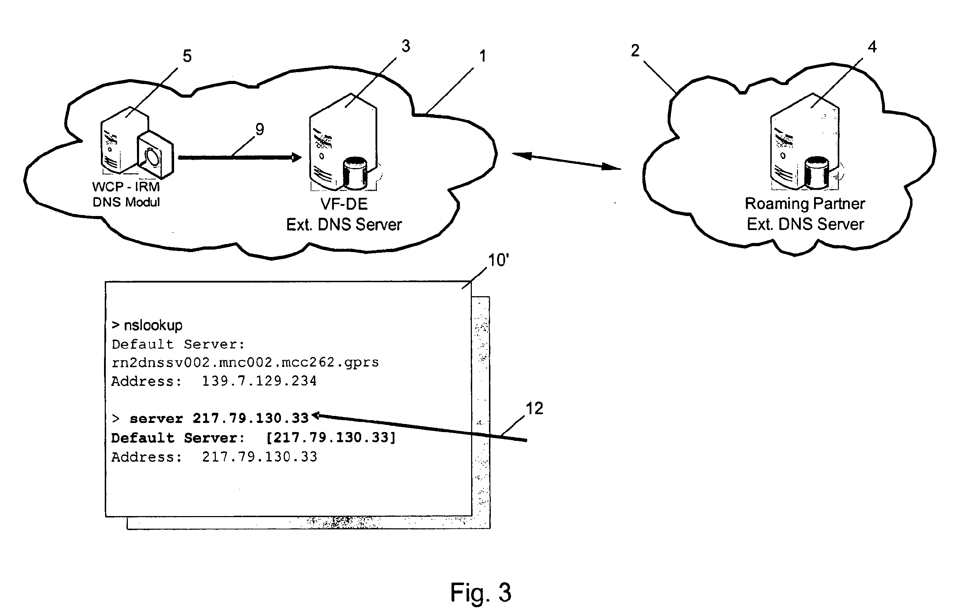

Fig. 2 zeigt ein Ausführungsbeispiel für einen entsprechenden nslookup 10, wobei die mit dem Bezugszeichen 11 gekennzeichnete Adresse im nslookup 10 die IP-Adresse des DNS Servers 3 des ersten Mobilfunknetzes 1 ist, vorliegend 139.7.129.234. Um den für den Kommunikationsdienst erforderlichen Zugangspunkt (APN) seitens des ersten Mobilfunknetzes 1 vom DNS Server des Roaming-Partners, vorliegend also dem DNS Server 4 des zweiten Mobilfunknetzes 2, auflösen zu lassen, wird der Default Server (im nslookup 10 in Fig. 2 noch mit "server xx.xx.xx.xx" gekennzeichnet) im nslookup 10 geändert (vgl. Fig. 3, nslookup 10', Bezugszeichen 12 "server 217.79.130.33"). Würde die Änderung unterlassen, so würde der Zugangspunkt (APN) vom eigenen DNS Server 3 des ersten Mobilfunknetzes 1 aufgelöst werden. Die Änderung des Default Servers im nslookup 10' wird dabei durch eine vom DNS Server 4 des zweiten Mobilfunknetzes 2 (Mobilfunknetz des Roaming-Partners) erfolgende Abfrage durchgeführt.

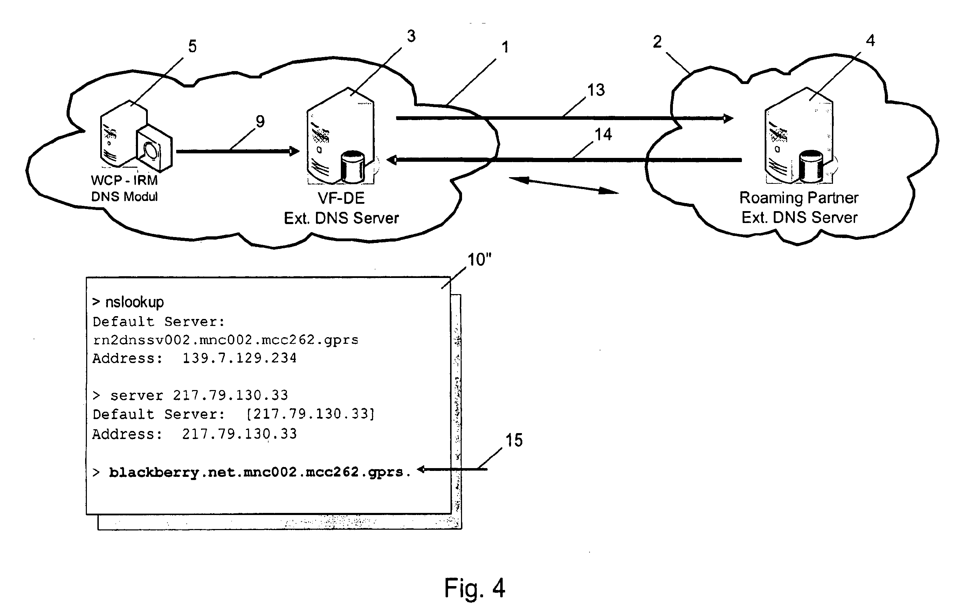

In dem in Fig. 4 mit dem Bezugszeichen 13 gekennzeichneten Verfahrensschritt 13 schickt der DNS-Server 3 des ersten Mobilfunknetzes 1 wenigstens eine an ihn selbst zu richtende Anfrage nach der Funktionsfähigkeit wenigstens eines Kommunikationsdienstes des ersten Mobilfunknetzes 1 an den DNS-Server 4 des zweiten Mobilfunknetzes 2. Mit der Anfrage soll dabei vorliegend die Funktionsfähigkeit des "blackberry.net" als GPRS-Kommunikationsdienst des ersten Mobilfunknetzes 1 für sich im zweiten Mobilfunknetz 2 aufhaltende Nutzer von mobilen Endgeräten des ersten Mobilfunknetzes 1 überprüft werden. In dem in Fig. 4 mit dem Bezugszeichen 14 gekennzeichneten Verfahrensschritt 14 richtet der der DNS Server 4 des zweiten Mobilfunknetzes 2 dann eine entsprechende Anfrage an den DNS Server 3 des ersten Mobilfunknetzes 1, vorliegend mittels des nslookup (nslookup blackberry.net.mnc002.mcc262.gprs). Dabei löst der DNS Server 2 des zweiten Mobilfunknetzes 2 den für den Kommunikationsdienst seitens des ersten Mobilfunknetzes 1 vorgesehenen Zugangspunkt (APN) auf. Fig. 4 zeigt ferner den entsprechenden nslookup 10", wobei der aufgelöste Zugangspunkt (APN) mit dem Bezugszeichen 15 gekennzeichnet ist.

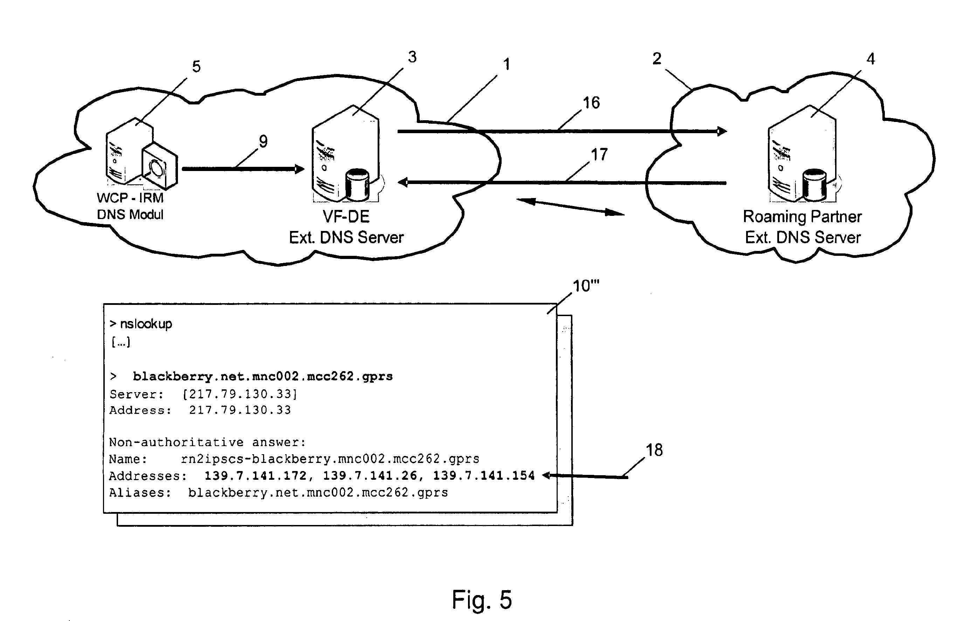

Wie in Fig. 5 dargestellt, antwortet der DNS Server 3 des ersten Mobilfunknetzes 1 auf die Anfrage (vgl. nslookup 10" gemäß Fig. 4) des DNS Servers 4 des zweiten Mobilfunknetzes 2 in dem mit dem Bezugszeichen 16 gekennzeichneten Verfahrensschritt 16, vorliegend insbesondere mit den für den GPRS-Kommunikationsdienst des ersten Mobilfunknetzes 1 vorgesehenen Zugangspunkten (APNs), beispielsweise "139.7.141.172, 139.7.141.26, 139.7.141.154", als Ergebnis auf die Anfrage. Die Antwort des DNS Servers 3 des ersten Mobilfunknetzes 1 auf die Anfrage wird dann von dem DNS Server 4 des zweiten Mobilfunknetzes 2 in dem in Fig. 5 mit dem Bezugszeichen 17 gekennzeichneten Verfahrensschritt 17 an den DNS Server 3 des ersten Mobilfunknetzes 1 gesendet bzw. weitergeleitet und im nslookup 10"' als Ergebnis erfasst. Fig. 5 zeigt ferner den entsprechenden nslookup 10"', wobei das Ergebnis auf die Anfrage mit dem Bezugszeichen 18 gekennzeichnet ist.

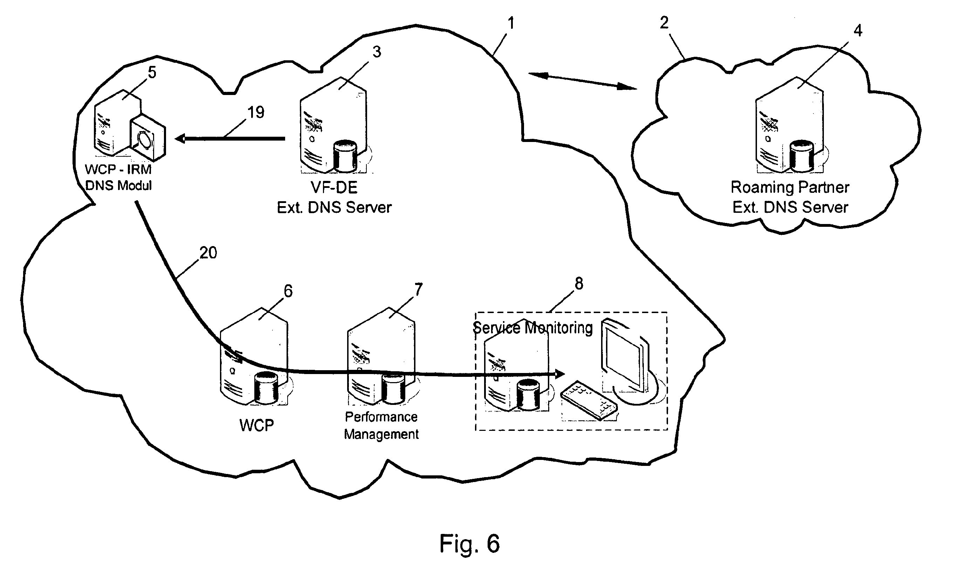

Fig. 6 zeigt, wie die seitens des DNS Servers 3 des ersten Mobilfunknetzes 1 mit dem nslookup 10"' empfangenen bzw. darin enthaltenen Messwerte bzw. Parameter der erfindungsgemäßen Überprüfung zur weiteren Auswertung und/oder Analyse, insbesondere zur Behebung von Funktionsstörungen und/oder -beschränkungen von dem DNS Server 3 des ersten Mobilfunknetzes 1 an die zentrale Einrichtung 5 des ersten Mobilfunknetzes 1, vorliegend dem WCP-IRM DNS Modul 5 des ersten Mobilfunknetzes 1, übertragen werden (in Fig. 1 durch den mit dem Bezugszeichen 19 gekennzeichneten Pfeil symbolisch dargestellt). Die Überprüfungsergebnisse sind anschließend mittels der weiteren Einrichtungen 6, 7 und/oder 8 des ersten Mobilfunknetzes 1 weiter administrierbar und/oder auswertbar (in Fig. 1 durch den mit dem Bezugszeichen 20 gekennzeichneten Pfeil symbolisch dargestellt).

Die in den Figuren der Zeichnung dargestellten und beschriebenen Ausführungsbeispiele der Erfindung dienen lediglich der Erläuterung der Erfindung und sind für diese nicht beschränkend.

### Bezugszeichenliste:

- 1: erstes Mobilfunknetz
- 2: zweites Mobilfunknetz
- 3: Recheneinrichtung/DNS-Server (erstes Mobilfunknetz (1))
- 4: Recheneinrichtung/DNS-Server (zweites Mobilfunknetz (2))
- 5: Einrichtung/WCP-IRM DNS Modul (erstes Mobilfunknetz (1))
- 6: Einrichtung/WCP (erstes Mobilfunknetz (1))
- 7: Einrichtung/Performance Management (erstes Mobilfunknetz (1))
- 8: Einrichtung/Service Management (erstes Mobilfunknetz (1))
- 9: Verbindung zwischen Einrichtung/WCP-IRM DNS Modul (5) und Recheneinrichtung/DNS-Server (3) zur Steuerung
- 10: nslookup
- 10': nslookup
- 10": nslookup
- 10"': nslookup
- 11: Einstellung des Default Servers (IP Adresse des eigenen DNS-Servers (3)) in nslookup (10)
- 12: Änderung des Default Servers (IP Adresse des eigenen DNS-Servers (3)) in nslookup (10')
- 13: Senden Anfrage zur Anfrage (nslookup)
- 14: Anfrage (nslookup)/Auflösen des Zugangspunkts
- 15: Auflösen des Zugangspunkts (blackberry.net APN) in nslookup (10")
- 16: Antwort Recheneinrichtung/DNS-Server (3) auf Anfrage (14)
- 17: Senden/Weiterleiten Antwort (16)
- 18: Ergebnis Anfrage (14) (Antwort (16)) in nslookup (10"')
- 19: Senden Messwerte der Überprüfung
- 20: Auswertung Messwerte (Überprüfung)

## Patentansprüche

1. Verfahren zur Überprüfung der Funktionsfähigkeit von Kommunikationsdiensten für in Mobilfunknetzen (1, 2) betreibbare mobile Endgeräte bei einem Roaming-Betrieb in wenigstens zwei Mobilfunknetzen (1, 2),
wobei
eine Recheneinrichtung (DNS-Server, 3) eines ersten Mobilfunknetzes (1) wenigstens eine
an die Recheneinrichtung (DNS-Server, 3) des ersten Mobilfunknetzes (1) zu richtende
Anfrage nach der Funktionsfähigkeit wenigstens eines Kommunikationsdienstes des ersten Mobilfunknetzes (1) an wenigstens eine Recheneinrichtung (DNS-Server, 4) wenigstens eines zweiten Mobilfunknetzes (2)
sendet,
die wenigstens eine Recheneinrichtung (DNS-Server, 4) des wenigstens einen zweiten Mobilfunknetzes (2)
aus der wenigstens einen empfangenen, an die Recheneinrichtung (DNS-Server, 3) des ersten Mobilfunknetzes (1) zu richtenden Anfrage nach der Funktionsfähigkeit wenigstens eines Kommunikationsdienstes des ersten Mobilfunknetzes (1)
wenigstens eine Anfrage nach der Funktionsfähigkeit wenigstens eines Kommunikationsdienstes der Recheneinrichtung (DNS-Server, 3) des ersten Mobilfunknetzes (1) erzeugt und
die wenigstens eine erzeugte Anfrage nach der Funktionsfähigkeit wenigstens eines Kommunikationsdienstes der Recheneinrichtung (DNS-Server, 3) des ersten Mobilfunknetzes (1)
an die Recheneinrichtung (DNS-Server, 3) des ersten Mobilfunknetzes (1) sendet,
die Recheneinrichtung (DNS-Server, 3) des ersten Mobilfunknetzes (1) auf die wenigstens eine empfangene Anfrage nach der Funktionsfähigkeit wenigstens eines Kommunikationsdienstes des ersten Mobilfunknetzes (1) wenigstens eine Antwort erzeugt und
die wenigstens eine erzeugte Antwort
an die wenigstens eine Recheneinrichtung (DNS-Server, 4) des wenigstens einen zweiten Mobilfunknetzes (2)
sendet,
und
die wenigstens eine Recheneinrichtung (DNS-Server, 4) des wenigstens einen zweiten Mobilfunknetzes (2)
die wenigstens eine empfangene Antwort
an die Recheneinrichtung (DNS-Server, 3) des ersten Mobilfunknetzes (1) sendet.

2. Verfahren nach Anspruch 1, **dadurch gekennzeichnet, dass** die wenigstens eine an die Recheneinrichtung (DNS-Server, 3) des ersten Mobilfunknetzes (1) zu richtende Anfrage nach der Funktionsfähigkeit wenigstens eines Kommunikationsdienstes des ersten Mobilfunknetzes (1) wenigstens eine Adressierungsinformation für einen Zugang zu dem wenigstens einen Kommunikationsdienst des ersten Mobilfunknetzes (1) aus dem wenigstens einen zweiten Mobilfunknetz (2) umfasst.

3. Verfahren nach Anspruch 1 oder Anspruch 2, **dadurch gekennzeichnet, dass** die wenigstens eine an die Recheneinrichtung (DNS-Server, 3) des ersten Mobilfunknetzes (1) zu richtende Anfrage nach der Funktionsfähigkeit wenigstens eines Kommunikationsdienstes des ersten Mobilfunknetzes (1) eine Anfrage nach der Verfügbarkeit und/oder der Leistungsfähigkeit des wenigstens eines Kommunikationsdienstes des ersten Mobilfunknetzes (1) im Roaming-Betrieb umfasst.

4. Verfahren nach einem der Ansprüche 1 bis 3, **dadurch gekennzeichnet, dass** der wenigstens eine Kommunikationsdienst des ersten Mobilfunknetzes (1) ein Datendienst ist, vorzugsweise ein auf IP-Adressen basierender Datendienst.

5. Verfahren nach einem der Ansprüche 1 bis 4, **dadurch gekennzeichnet, dass** die wenigstens eine an die Recheneinrichtung (DNS-Server, 3) des ersten Mobilfunknetzes (1) zu richtende Anfrage nach der Funktionsfähigkeit wenigstens eines Kommunikationsdienstes des ersten Mobilfunknetzes (1) seitens wenigstens einer Einrichtung (WCP-IRM DNS Modul, 5) des ersten Mobilfunknetzes (1) erzeugt und/oder vorgehalten wird.

6. Verfahren nach einem der Ansprüche 1 bis 5, **dadurch gekennzeichnet, dass** die wenigstens eine von der Recheneinrichtung (DNS-Server, 3) des ersten Mobilfunknetzes (1) empfangene Antwort seitens wenigstens einer Einrichtung (WCP-IRM DNS Modul, 5) des ersten Mobilfunknetzes (1) erfasst und/oder vorgehalten wird.

7. Verfahren nach Anspruch 5 oder Anspruch 6, **dadurch gekennzeichnet, dass** die wenigstens eine Einrichtung (WCP-IRM DNS Modul, 5) des ersten Mobilfunknetzes (1) administrierbar ist.

8. Verfahren nach Anspruch 7, **gekennzeichnet durch** eine Administration hinsichtlich der wenigstens einen an die Recheneinrichtung (DNS-Server, 3) des ersten Mobilfunknetzes (1) zu richtenden Anfrage nach der Funktionsfähigkeit wenigstens eines Kommunikationsdienstes des ersten Mobilfunknetzes (1) und/oder hinsichtlich der wenigstens einen von der Recheneinrichtung (DNS-Server, 3) des ersten Mobilfunknetzes (1) empfangenen Antwort.

9. Verfahren nach einem der Ansprüche 1 bis 8, **dadurch gekennzeichnet, dass** die Recheneinrichtung (DNS-Server, 3) des ersten Mobilfunknetzes (1) ein DNS-Server (3) des ersten Mobilfunknetzes (1) ist.

10. Verfahren nach einem der Ansprüche 1 bis 9, **dadurch gekennzeichnet, dass** die wenigstens eine Recheneinrichtung (DNS-Server, 4) des wenigstens einen zweiten Mobilfunknetzes (2) ein DNS-Server (4) des wenigstens einen zweiten Mobilfunknetzes (2) ist.

11. Verfahren nach einem der Ansprüche 5 bis 10, **dadurch gekennzeichnet, dass** die wenigstens einer Einrichtung (WCP-IRM DNS Modul, 5) des ersten Mobilfunknetzes (1) ein WCP-IRM DNS Modul (5) ist.

12. Verfahren nach einem der Ansprüche 1 bis 11, **dadurch gekennzeichnet, dass** die Anfrage nach der Funktionsfähigkeit wenigstens eines Kommunikationsdienstes des ersten Mobilfunknetzes (1) ein "nslookup" (10, 10', 10", 10"') ist.

13. Verfahren nach einem der Ansprüche 1 bis 12, **dadurch gekennzeichnet, dass** das erste Mobilfunknetz (1) und/oder das wenigstens eine zweite Mobilfunknetz (2) ein Mobilfunknetz gemäß einem GSM-, GPS-, UMTS- und/oder LTE-Funknetzstandard ist.

14. Netzknoten in einem Mobilfunknetz (1, 2), insbesondere einem Mobilfunknetz gemäß einem GSM-, GPRS-, UMTS- und/oder LTE-Funknetzstandard, **dadurch gekennzeichnet, dass** dieser ausgebildet und/oder eingerichtet ist ein Verfahrens nach einem der Ansprüche 1 bis 13 auszuführen.

## Claims

1. A method for checking the functionality of communication services for mobile terminals that can be operated in mobile networks (1, 2) using a roaming system in at least two mobile networks (1, 2),
wherein
a computing device (DNS server, 3) of a first mobile network (1) sends
at least one inquiry about the functionality of at least one communication service of the first mobile network (1), which inquiry is to be directed to the computing device (DNS server, 3) of the first mobile network (1),
to at least one computing device (DNS server, 4) of at least one second mobile network (2),
the at least one computing device (DNS server, 4) of the at least one second mobile network (2)
generates at least one inquiry about the functionality of at least one communication service of the computing device (DNS server, 3) of the first mobile network (1)
on the base of the at least one received inquiry about the functionality of at least one communication service of the first mobile network (1), which inquiry is to be directed to the computing device (DNS server, 3) of the first mobile network (1), and
sends the at least one generated inquiry about the functionality of at least one communication service of the computing device (DNS server, 3) of the first mobile network (1)
to the computing device (DNS server, 3) of the first mobile network (1),
the computing device (DNS server, 3) of the first mobile network (1) generates at least one reply to the at least one received inquiry about the functionality of at least one communication service of the first mobile network (1) and
sends the at least one generated reply
to the at least one computing device (DNS server, 4) of the at least one second mobile network (2),
and
the at least one computing device (DNS server, 4) of the at least one second mobile network (2)
sends
the at least one received reply
to the computing device (DNS server, 3) of the first mobile network (1).

2. A method according to claim 1, **characterized in that** the at least one inquiry about the functionality of at least one communication service of the first mobile network (1), which inquiry is to be directed to the computing device (DNS server, 3) of the first mobile network (1), comprises at least one addressing information item for providing the at least one second mobile network (2) with an access to the at least one communication service of the first mobile network (1).

3. A method according to claim 1 or claim 2, **characterized in that** the at least one inquiry about the functionality of at least one communication service of the first mobile network (1), which inquiry is to be directed to the computing device (DNS server, 3) of the first mobile network (1), comprises an inquiry about the availability and/or the efficiency of the at least one communication service of the first mobile network (1) using the roaming system.

4. A method according to one of the claims 1 through 3, **characterized in that** the at least one communication service of the first mobile network (1) is a data service, preferably a data service based upon IP addresses.

5. A method according to one of the claims 1 through 4, **characterized in that** the at least one inquiry about the functionality of at least one communication service of the first mobile network (1), which inquiry is to be directed to the computing device (DNS server, 3) of the first mobile network (1), is generated and/or held available by at least one device (WCP-IRM DNS module, 5) of the first mobile network (1).

6. A method according to one of the claims 1 through 5, **characterized in that** the at least one reply received from the computing device (DNS server, 3) of the first mobile network (1) is gathered and/or held available by at least one device (WCP-IRM DNS module, 5) of the first mobile network (1).

7. A method according to claim 5 or claim 6, **characterized in that** the at least one device (WCP-IRM DNS module, 5) of the first mobile network (1) can be administrated.

8. A method according to claim 7, **characterized by** an administration with respect to the at least one inquiry about the functionality of at least one communication service of the first mobile network (1), which inquiry is to be directed to the computing device (DNS server, 3) of the first mobile network (1), and/or with respect to the at least one reply received from the computing device (DNS server, 3) of the first mobile network (1).

9. A method according to one of the claims 1 through 8, **characterized in that** the computing device (DNS server, 3) of the first mobile network (1) is a DNS server (3) of the first mobile network (1).

10. A method according to one of the claims 1 through 9, **characterized in that** the at least one computing device (DNS server, 4) of the at least one second mobile network (2) is a DNS server (4) of the at least one second mobile network (2).

11. A method according to one of the claims 5 through 10, **characterized in that** the at least one device (WCP-IRM DNS module, 5) of the first mobile network (1) is a WCP-IRM DNS module (5).

12. A method according to one of the claims 1 through 11, **characterized in that** the inquiry about the functionality of at least one communication service of the first mobile network (1) is a "nslookup" (10, 10', 10", 10"').

13. A method according to one of the claims 1 through 12, **characterized in that** the first mobile network (1) and/or the at least one second mobile network (2) is a mobile network according to a GSM, GPS, UMTS and/or LTE radio network standard.

14. A network node in a mobile network (1, 2), in particular a mobile network according to a GSM, GPRS, UMTS and/or LTE radio network standard, **characterized in that** this one is designed and/or adapted to carry out a method according to one of the claims 1 through 13.

## Revendications

1. Procédé de contrôle de la capacité de fonctionnement de services de communication pour des terminaux mobiles fonctionnant dans des réseaux radio mobiles (1, 2) en fonctionnement d'itinérance dans au moins deux réseaux radio mobiles (1, 2),
dans lequel
un dispositif de calcul (serveur DNS, 3) d'un premier réseau radio mobile (1) envoie
au moins une demande par rapport à la capacité de fonctionnement d'au moins un service de communication du premier réseau radio mobile (1), laquelle demande est à adresser au dispositif de calcul (serveur DNS, 3) du premier réseau radio mobile (1),
à au moins un dispositif de calcul (serveur DNS, 4) d'au moins un deuxième réseau radio mobile (2),
l'au moins un dispositif de calcul (serveur DNS, 4) de l'au moins un deuxième réseau radio mobile (2)
génère au moins une demande par rapport à la capacité de fonctionnement d'au moins un service de communication du dispositif de calcul (serveur DNS, 3) du premier réseau radio mobile (1)
à partir de l'au moins une demande reçue par rapport à la capacité de fonctionnement d'au moins un service de communication du premier réseau radio mobile (1), laquelle demande est à adresser au dispositif de calcul (serveur DNS, 3) du premier réseau radio mobile (1), et
envoie l'au moins une demande générée par rapport à la capacité de fonctionnement d'au moins un service de communication du dispositif de calcul (serveur DNS, 3) du premier réseau radio mobile (1) au dispositif de calcul (serveur DNS, 3) du premier réseau radio mobile (1),
le dispositif de calcul (serveur DNS, 3) du premier réseau radio mobile (1) génère au moins une réponse à l'au moins une demande reçue par rapport à la capacité de fonctionnement d'au moins un service de communication du premier réseau radio mobile (1), et
envoie l'au moins une réponse générée
à l'au moins un dispositif de calcul (serveur DNS, 4) de l'au moins un deuxième réseau radio mobile (2), et
l'au moins un dispositif de calcul (serveur DNS, 4) de l'au moins un deuxième réseau radio mobile (2)
envoie
l'au moins une réponse reçue
au dispositif de calcul (serveur DNS, 3) du premier réseau radio mobile (1).

2. Procédé selon la revendication 1, **caractérisé en ce que** l'au moins une demande par rapport à la capacité de fonctionnement d'au moins un service de communication du premier réseau radio mobile (1), laquelle demande est à adresser au dispositif de calcul (serveur DNS, 3) du premier réseau radio mobile (1), comprend au moins une information d'adressage pour rendre possible un accès à l'au moins un service de communication du premier réseau radio mobile (1) à partir de l'au moins un deuxième réseau radio mobile (2).

3. Procédé selon la revendication 1 ou la revendication 2, **caractérisé en ce que** l'au moins une demande par rapport à la capacité de fonctionnement d'au moins un service de communication du premier réseau radio mobile (1), laquelle demande est à adresser au dispositif de calcul (serveur DNS, 3) du premier réseau radio mobile (1), comprend une demande par rapport à la disponibilité et/ou à l'efficacité de l'au moins un service de communication du premier réseau radio mobile (1) en fonctionnement d'itinérance.

4. Procédé selon l'une des revendications 1 à 3, **caractérisé en ce que** l'au moins un service de communication du premier réseau radio mobile (1) est un service de données, de préférence un service de données se fondant sur des adresses IP.

5. Procédé selon l'une des revendications 1 à 4, **caractérisé en ce que** l'au moins une demande par rapport à la capacité de fonctionnement d'au moins un service de communication du premier réseau radio mobile (1), laquelle demande est à adresser au dispositif de calcul (serveur DNS, 3) du premier réseau radio mobile (1), est générée et/ou tenue à disposition par au moins un dispositif (module WCP-IRM DNS, 5) du premier réseau radio mobile (1).

6. Procédé selon l'une des revendications 1 à 5, **caractérisé en ce que** l'au moins une réponse reçue par le dispositif de calcul (serveur DNS, 3) du premier réseau radio mobile (1) est saisie et/ou tenue à disposition par au moins un dispositif (module WCP-IRM DNS, 5) du premier réseau radio mobile (1).

7. Procédé selon la revendication 5 ou la revendication 6, **caractérisé en ce que** l'au moins un dispositif (module WCP-IRM DNS, 5) du premier réseau radio mobile (1) est susceptible d'être administré.

8. Procédé selon la revendication 7, **caractérisé par** une administration par rapport à l'au moins une demande par rapport à la capacité de fonctionnement d'au moins un service de communication du premier réseau radio mobile (1), laquelle demande est à adresser au dispositif de calcul (serveur DNS, 3) du premier réseau radio mobile (1), et/ou par rapport à l'au moins une réponse reçue du dispositif de calcul (serveur DNS, 3) du premier réseau radio mobile (1).

9. Procédé selon l'une des revendications 1 à 8, **caractérisé en ce que** le dispositif de calcul (serveur DNS, 3) du premier réseau radio mobile (1) est un serveur DNS (3) du premier réseau radio mobile (1).

10. Procédé selon l'une des revendications 1 à 9, **caractérisé en ce que** l'au moins un dispositif de calcul (serveur DNS, 4) de l'au moins un deuxième réseau radio mobile (2) est un serveur DNS (4) de l'au moins un deuxième réseau radio mobile (2).

11. Procédé selon l'une des revendications 5 à 10, **caractérisé en ce que** l'au moins un dispositif (module WCP-IRM DNS, 5) du premier réseau radio mobile (1) est un module WCP-IRM DNS (5).

12. Procédé selon l'une des revendications 1 à 11, **caractérisé en ce que** la demande par rapport à la capacité de fonctionnement d'au moins un service de communication du premier réseau radio mobile (1) est un « nslookup » (10, 10', 10", 10"'9.

13. Procédé selon l'une des revendications 1 à 12, **caractérisé en ce que** le premier réseau radio mobile (1) et/ou l'au moins un deuxième réseau radio mobile (2) est un réseau radio mobile selon un standard radio mobile de GSM, de GPRS, de UMTS et/ou de LTE.

14. Noeud de réseau dans un réseau radio mobile (1, 2), notamment dans un réseau radio mobile selon un standard radio mobile de GSM, de GPRS, de UMTS et/ou de LTE, **caractérisé en ce que** celui-ci est configuré et/ou adapté à exécuter un procédé selon l'une des revendications 1 à 13.
